# EUROPÄISCHE PATENTSCHRIFT

(11) **EP 2 576 275 B1**
(45) Veröffentlichungstag und Bekanntmachung des Hinweises auf die Patenterteilung: **12.12.2018**
(21) Anmeldenummer: 11717495.3
(22) Anmeldetag: 21.04.2011
(51) Int. Cl.: B60L 11/18, H02J 7/00, B60W 10/26, B60K 6/20

(54) **VERFAHREN ZUM BETREIBEN EINER ELEKTRISCHEN BATTERIE EINES KRAFTFAHRZEUGS SOWIE KRAFTFAHRZEUG**
METHOD FOR OPERATING AN ELECTRIC BATTERY OF A MOTOR VEHICLE, AND MOTOR VEHICLE
PROCÉDÉ POUR FAIRE FONCTIONNER UNE BATTERIE ÉLECTRIQUE D'UN VÉHICULE AUTOMOBILE ET VÉHICULE AUTOMOBILE

(30) Priorität: 29.05.2010 DE 102010022021
(43) Veröffentlichungstag der Anmeldung: 10.04.2013
(73) Patentinhaber: Audi AG, 85045 Ingolstadt (DE)
(72) Erfinder: BLASINSKI, Boris, 85049 Ingolstadt (DE); KASTENEDER, Rene, 85126 Münchsmünster (DE)
(74) Vertreter: Herbst, Matthias Heinz
(86) Internationale Anmeldenummer: PCT/EP2011/002059
(87) Internationale Veröffentlichungsnummer: WO 2011/150996

(56) Entgegenhaltungen:
- EP-A1- 2 177 389
- US-A1- 2003 231 005

## Beschreibung

Die Erfindung betrifft ein Verfahren nach dem Oberbegriff des Patentanspruchs 1 sowie ein Kraftfahrzeug nach dem Oberbegriff des Patentanspruchs 7.

Ausgegangen ist von der Situation, dass in einem Hybridfahrzeug, also einem Kraftfahrzeug mit Verbrennungskraftmaschine und elektrischem Antrieb, eine Strom für den elektrischen Antrieb bereitstellende Batterie zu kalt ist, um Leistung abzugeben. Es ist für diesen Fall bekannt, die Batterie zu heizen. Das Heizen erfolgt dadurch, dass die Batterie in einer wechselnden Vorgangsfolge teilentladen und wieder teilgeladen wird. Dies funktioniert so, dass nach Aufnahme der Fahrt zunächst die Verbrennungskraftmaschine arbeitet und der elektrische Antrieb in Umkehr seines Wirkprinzips als Generator arbeitet. Der Generator erzeugt Strompulse, mit denen die Batterie beaufschlagt wird, und aufgrund des Widerstands der Batterie erfolgt dadurch ein Wärmeeintrag. Zum wechselnden Entladen und Laden der Batterie wird die elektrische Maschine wechselnd mit einem positiven und einem negativen Drehmoment beaufschlagt. Damit bei der Fahrt des Kraftfahrzeugs auf die Räder ein von dem Fahrer gewünschtes Drehmoment aufgebracht wird, wird der Wechsel in der Beaufschlagung der elektrischen Maschine durch die Verbrennungskraftmaschine kompensiert.

Damit das Teilentladen und Teilladen keine Auswirkung auf die Lebensdauer der Batterie hat, wird der Beladungszustand der Batterie bei jedem Vorgang des Teilentladens oder -ladens lediglich um maximal 1% der maximalen Beladung (des sog. absoluten SOC, "state of charge") geändert, allenfalls um 2%.

Diese Art des Heizens einer elektrischen Batterie ist beispielsweise aus der JP 2005 332 777 A, der JP 2007 012 568 A und der US 7,015,676 B2 bekannt.

Wie beispielsweise in der US 7,015,676 B2 beschrieben, erfolgt bisher das Teilentladen und Teilladen bei einem bestimmten Beladungszustand der Batterie, also in einem bestimmten Intervall für den SOC. Beispielsweise liegt dieses Intervall zwischen 70% und 80% SOC.

Die EP 2 177 389 A1 beschreibt ein Fahrzeug mit einer Batterie, die mithilfe einer externen Ladeeinrichtung aufgeladen werden kann. Hierbei wird die Temperatur der Batterie im Fahrzeug so angepasst, dass ein energieeffizientes Laden der Batterie beim Erreichen der Ladeeinrichtung mit dem Fahrzeug ermöglicht wird.

Die 2003/231005 A1 offenbart den Oberbegriff der Ansprüche 1 und 7.

Es kann nun sein, dass die Batterie bei einem Kaltstart einen SOC von 30% hat. Dann wird bisher zunächst dafür gesorgt, dass der Beladungszustand der Batterie in das besagte Intervall fällt. So wird die Batterie zunächst aufgeladen, ohne dass geheizt wird, und nach Erreichen des Intervalls wird mit dem Heizen begonnen.

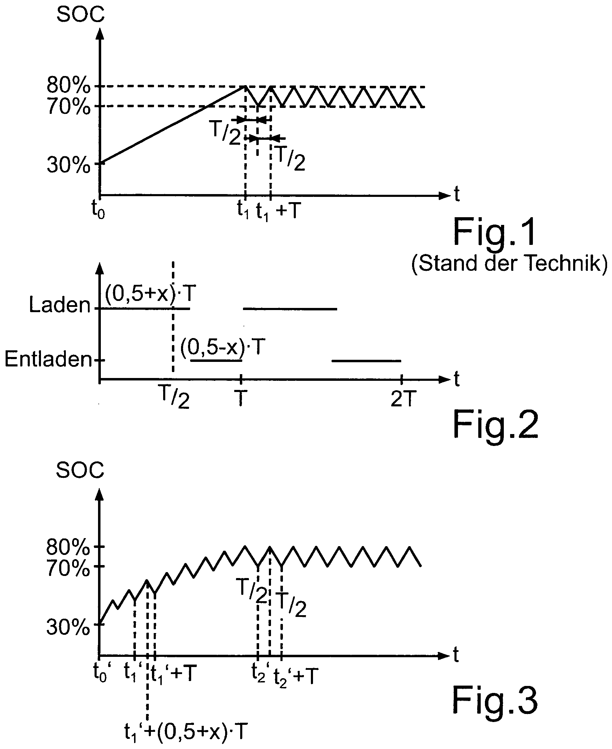

Dies wird vorliegend anhand von Fig. 1 erläutert, die den Beladungszustand über die Zeit veranschaulicht, wie er bei einem Beispiel gemäß dem Stand der Technik eingestellt wird.

Zu einem Zeitpunkt *t₀* bei einem Kaltstart betrage der Beladungszustand SOC der elektrischen Batterie 30%. Mit Hilfe der Verbrennungskraftmaschine wird das Kraftfahrzeug gefahren und gleichzeitig der Generator betrieben, wobei der gewonnene Strom zur Beladung der Batterie dient, bis zu einem Zeitpunkt *t₁* der Beladungszustand SOC in einem Intervall von zwischen 70% und 80% liegt. Sobald dieses Intervall erreicht ist, beginnt ein Heizen der Batterie, in dem sie in wechselnder Folge entladen und wieder geladen wird. Bei gleicher Höhe der Strompulse in und aus der Batterie erfolgt das Ent- und Beladen der Batterie periodisch mit einer Periode *T*, in deren ersten Hälfte der Dauer *T*/*2* entladen wird und in deren zweiten Hälfte der gleichen Dauer *T*/*2* beladen wird. Somit wird, ist einmal mit dem Heizen begonnen, an dem Beladungszustand der elektrischen Batterie über die periodische Schwankung hinaus dauerhaft nichts geändert.

Nachteilig an dem Verfahren gemäß dem Stand der Technik ist es, dass das Laden der Batterie, im Beispiel zwischen der Zeitdauer t₀ und der Zeitdauer *t₁*, oder in anderen Fällen ein Entladen der Batterie, eine zu große Zeit in Anspruch nimmt, während der die Batterie nicht geheizt wird. Dadurch verzögert sich die spätere Nutzung der Batterie, und insbesondere kann der elektrische Antrieb erst verspätet in Betrieb genommen werden, wenn die Batterie zunächst kalt ist.

Es ist Aufgabe der Erfindung, einen Weg aufzuzeigen, wie in einem Hybridfahrzeug der elektrische Antrieb besser, insbesondere zumindest komfortabler oder zumindest effizienter, genutzt werden kann.

Die Aufgabe wird in einem Aspekt durch ein Verfahren mit den Merkmalen gemäß Patentanspruch 1 gelöst, und in einem anderen Aspekt durch ein Kraftfahrzeug mit den Merkmalen gemäß Patentanspruch 7 gelöst.

Erfindungsgemäß wird eine Vielzahl von Wiederholungen des ersten und zweiten Vorgangs (des Teilentladens und Teilladens) derart durchgeführt, dass nach mehreren Perioden eine Änderung des Beladungszustands eintritt.

Mit anderen Worten wirkt sich die wechselnde Folge von Teilentladen und Teilladen nicht mehr neutral in dem Beladungszustand aus, sondern der Vorgang des Heizens wird gleichzeitig zur Bewirkung der Änderung des Beladungszustands genutzt.

Mit einer Änderung ist hierbei insbesondere eine periodenübergreifende Änderung des Beladungszustands der Batterie gemeint. Insbesondere wird der Beladungszustand der Batterie bei den einzelnen Vorgängen des Teilentladens und -ladens lediglich höchstens um 2%, bevorzugt sogar nur um zwischen 0,8% und 1,5%, z. B. um 1%, geändert. Die Änderung geht über diese prozentuale Änderung hinaus. Die nach mehreren Perioden eingetretene Änderung ist also größer als die in einem einzelnen Vorgang einer einzigen Periode durch Teilentladen oder durch Teilladen bewirkte Änderung.

Bevorzugt dauert jeder Vorgang höchstens eine Minute, besonders bevorzugt sogar nur höchstens 20 Sekunden, besonders bevorzugt zwischen 5 und 15 Sekunden, z. B. 10 Sekunden, es wird also bei der Erfindung eine besonders kleine Periodendauer gewählt, sodass effizient geheizt werden kann.

Wie aus dem Stand der Technik bekannt, erfolgt das Wiederholen bevorzugt periodisch. Anders als im Stand der Technik, währen die beiden Vorgänge (Teilentladen und -laden) jedoch ungleiche Anteile der Periodendauer. Soll eine dauerhafte Ladung erfolgen, währt der Vorgang des Teilladens länger als der des Teilentladens. Soll eine dauerhafte Entladung erfolgen, so dauert der Vorgang des Teilentladens länger als der des Teilladens. Durch eine geeignete Taktung von Teilentladen und Teilladen kann ansonsten an die Techniken aus dem Stand der Technik angeknüpft werden, bei denen die Geschwindigkeit des Teilentladens und des Teilladens jeweils gleich schnell ist.

Alternativ kann eine Änderung des Beladungszustands auch dann bewirkt werden, wenn bei gleicher Dauer der Vorgänge des Teilentladens und des Teilladens mit unterschiedlichen Amplituden der Ströme gearbeitet wird, wenn z. B. zum Bewirken einer dauerhaften Ladung eine größere Stromstärke in die Batterie eingetragen wird als aus ihr beim Teilentladen entnommen wird.

Durch das erfindungsgemäße Verfahren ist es möglich, unmittelbar mit einem Kaltstart des Kraftfahrzeugs mit dem Heizen der Batterie und damit dem erfindungsgemäßen Verfahren zu beginnen, es muss also nicht mehr abgewartet werden, bis der Beladungszustand der elektrischen Batterie in einem bestimmten Werteintervall liegt. Ein Kaltstart zeichnet sich dadurch aus, dass die Temperatur, insbesondere die der elektrischen Batterie selbst, einen vorbestimmten Wert unterschreitet.

In der Regel wird die Änderung des Beladungszustands eine positive Änderung sein, es wird also in der Regel die Batterie dauerhaft geladen, somit eine Erhöhung der in der Batterie gespeicherten Ladung bewirkt. Durch die Erfindung wird ein solches Laden in effizienter Weise mit dem Heizen der Batterie verknüpft. Die Batterie wird gleichzeitig relativ schnell geladen und gleichzeitig relativ schnell geheizt, sodass alsbald die elektrische Maschine als Antrieb in Betrieb genommen werden kann.

Das erfindungsgemäße Kraftfahrzeug weist eine Verbrennungskraftmaschine und einen elektrischen Antrieb auf, dem eine elektrische Batterie zur Speisung zugeordnet ist, und zudem gibt es eine Steuereinrichtung in dem Kraftfahrzeug, welche ausgelegt ist, die Batterie zum Zwecke ihres Heizens wiederholt in einem ersten Vorgang teilzuentladen und anschließend in einem zweiten Vorgang teilzuladen, wobei das Kraftfahrzeug dadurch gekennzeichnet ist, dass die Steuereinrichtung dazu ausgelegt ist, eine Vielzahl von Wiederholungen des ersten und anschließenden zweiten Vorgangs derart durchzuführen, dass nach mehreren Perioden eine Änderung des Beladungszustands eintritt. Insbesondere erlaubt die Steuerung eine solche Taktung beim Entladen und Laden, dass die jeweiligen Vorgänge unterschiedlich lang dauern, also unterschiedliche Anteile einer Periodendauer einnehmen. Zur Erhöhung der Variabilität kann auch die Periodendauer variabel sein und während des Heizens geändert werden.

Nachfolgend wird eine bevorzugte Ausführungsform der Erfindung unter Bezug auf die Zeichnung beschrieben, in der
- Fig. 1: eine Kurve des Beladungszustands einer elektrischen Batterie in Abhängigkeit von der Zeit gemäß einem Beispiel ist, das zur Erläuterung des Standes der Technik dient,
- Fig. 2: eine bei der Erfindung realisierte schematische Abfolge der Vorgänge des Ladens und Entladens veranschaulicht und
- Fig. 3: eine der Fig. 1 entsprechende Kurve des Beladungszustands der Batterie in Abhängigkeit von der Zeit gemäß einem Beispiel ist, das zur Erläuterung der Erfindung dient.

Zur Erläuterung der Erfindung ist abermals davon ausgegangen, dass zu einem Zeitpunkt t₀' ein Beladungszustand der Batterie von 30% gegeben ist, und dass die Batterie kalt ist und geheizt werden muss. Anders als im Stand der Technik (vergleiche Fig. 1) wird zum Zeitpunkt t₀' sogleich mit dem Heizen begonnen: Es wird begonnen, die elektrische Batterie in wechselnder Folge zu laden und wieder zu entladen. Gleichzeitig mit dem Heizen erfolgt zunächst ein Laden der Batterie von 30% in das Intervall von zwischen 70% und 80% hinein. Dies ist dadurch ermöglicht, dass bei gleicher Höhe der Strompulse der Vorgang des Ladens jeweils etwas länger dauert als der Vorgang des Entladens. Erfolgt das Laden und Entladen in einer Periode mit der Gesamtdauer *T,* so wird etwas länger als über die Zeitdauer *T*/2 geladen, nämlich für eine Zeitdauer von (0,5 + *x*)·*T,* wobei 0 < *x* < 0,5, bevorzugt 0,05 < *x* < 0,45 ist. Dementsprechend wird über eine Zeitdauer von (0,5 *- x*)·*T* entladen.

Wie aus Fig. 3 ersichtlich, steigt ausgehend von einem Zeitpunkt *t₁'* in der Periode bis *t₁'*+*T* der Beladungszustand SOC an, die Batterie wird also während jeder Periode insgesamt ein wenig mehr geladen als sie entladen wird. Dies liegt daran, dass bis zur Zeitdauer von *t₁'* + (0,5+*x*)·*T* geladen wird, während für eine kürzere Restzeit entladen wird.

Der Vorgang der Nettoladung der Batterie wird bis zu einem Zeitpunkt *t₂*' durchgeführt. Innerhalb der Zeitdauer zwischen *t₀'* und *t₂*' kann zusätzlich die Periode variiert werden. Ab dem Zeitpunkt *t₂*' wird dann, wie aus dem Stand der Technik bekannt, derart geheizt, dass die Zeitdauer des Ladens und des Entladens jeweils gleich *T*/*2* ist, sodass nach Erreichen eines gewünschten Beladungszustands zum Zeitpunkt *t₂*' keine dauerhafte Änderung in dem Beladungszustand mehr auftritt.

Nach Beendigung des Heizens kann die Batterie dann dazu dienen, den elektrischen Antrieb des Kraftfahrzeugs mit Strom zu speisen. Dann wird die Batterie wieder entladen, was in Fig. 3 nicht dargestellt ist.

Durch geeignete Wahl der Größen *x* und *T,* die beide über die Dauer des Heizens auch variiert werden können, können beliebige Kurven des Beladungszustands über die Zeit erzielt werden. Je nach den Eigenschaften der elektrischen Batterie und nach der Temperatur sowie gegebenenfalls weiterer Parameter kann eine jeweils passende Kurve beim Heizen und gleichzeitigen Laden durchlaufen werden.

Das oben Ausgeführte gilt analog für den Fall, dass die Batterie bei einem Kaltstart zunächst entladen werden muss.

## Patentansprüche

1. Verfahren zum Betreiben einer elektrischen Batterie eines Kraftfahrzeugs, die zum Zwecke ihres Heizens wiederholt in einem ersten Vorgang teilentladen wird und anschließend in einem zweiten Vorgang teilgeladen wird,
**dadurch gekennzeichnet, dass**
eine Vielzahl von Wiederholungen des ersten und anschließenden zweiten Vorgangs derart durchgeführt wird, dass nach mehreren Perioden der Teilentadung und der Teileladung eine Änderung des Beladungszustands eintritt.

2. Verfahren nach Anspruch 1,
**dadurch gekennzeichnet, dass**
bei jedem Vorgang der Beladungszustand der Batterie um höchstens 2% geändert wird.

3. Verfahren nach Anspruch 1 oder 2,
**dadurch gekennzeichnet, dass**
jeder Vorgang höchstens eine Minute währt, bevorzugt höchstens 20 Sekunden währt, und besonders bevorzugt zwischen 5 und 15 Sekunden währt.

4. Verfahren nach einem der vorhergehenden Ansprüche,
**dadurch gekennzeichnet, dass**
das Wiederholen zumindest eine vorbestimmte Anzahl von Malen periodisch erfolgt, wobei die beiden Vorgänge ungleiche Anteilsdauern der Periodendauer währen.

5. Verfahren nach Anspruch 4,
**dadurch gekennzeichnet, dass**
die Anteilsdauer der beiden Vorgänge variiert wird.

6. Verfahren nach einem der vorhergehenden Ansprüche,
**dadurch gekennzeichnet, dass**
es unmittelbar mit einem Kaltstart des Kraftfahrzeugs beginnt und/oder die dauerhafte Änderung eine Erhöhung der in der Batterie gespeicherten Ladung beinhaltet.

7. Kraftfahrzeug mit einer Verbrennungskraftmaschine und einem elektrischen Antrieb, dem eine elektrische Batterie zur Speisung zugeordnet ist, mit einer Steuereinrichtung, die dazu ausgelegt ist, die Batterie zum Zwecke ihres Heizens wiederholt in einem ersten Vorgang teilzuentladen und anschließend in einem zweiten Vorgang teilzuladen,
**dadurch gekennzeichnet, dass**
die Steuereinrichtung ausgelegt ist, eine Vielzahl von Wiederholungen des ersten und anschließenden zweiten Vorgangs derart durchzuführen, dass nach mehreren Perioden der Teilentadung und der Teileladung eine Änderung des Beladungszustands eintritt.

## Claims

1. Method for operating an electric battery of a motor vehicle, which is repeatedly partially discharged in a first operation, for the purposes of heating same, and then partially charged in a second operation,
**characterised in that**
a plurality of repetitions of the first and subsequent second operations are carried out such that, after several periods of the partial discharging and partial charging, a change in the charge state occurs.

2. Method according to claim 1,
**characterised in that**
during each operation the charge state of the battery changes by at most 2 %.

3. Method according to claim 1 or 2,
**characterised in that**
each operation lasts at most one minute, preferably lasts at most 20 seconds, and particularly preferably lasts between 5 and 15 seconds.

4. Method according to one of the preceding claims,
**characterised in that**
the repetition occurs periodically at least a predetermined number of times, wherein the two operations last an unequal portion of the period.

5. Method according to claim 4,
**characterised in that**
the portion of the period for the two processes is varied.

6. Method according to one of the preceding claims,
**characterised in that**
said method starts directly with a cold start of the motor vehicle and/or the permanent change includes an increase in the charge stored in the battery.

7. Motor vehicle comprising an internal combustion engine and an electric drive which is associated with an electric supply battery, comprising a control unit which is designed to partially discharge the battery repeatedly in a first operation for the purposes of heating same, and then partially charge the battery in a second operation,
**characterised in that**
the control unit is designed to carry out a plurality of repetitions of the first and then second operation such that, after several periods of partial discharging and partial charging, a change in the charge state occurs.

## Revendications

1. Procédé pour faire actionner une batterie électrique d'un véhicule automobile qui, dans le cadre de son chauffage, est de manière répétée déchargée en partie dans un premier stade et ensuite chargée en partie dans un second stade,
**caractérisé en ce que**
une pluralité de répétitions du premier et ensuite du second stade est réalisée de sorte qu'après plusieurs périodes de déchargement partiel et de chargement partiel, il se produise une modification de l'état de chargement.

2. Procédé selon la revendication 1,
**caractérisé en ce que**,
à chaque stade, l'état de chargement de la batterie est modifié au maximum de 2 %.

3. Procédé selon la revendication 1 ou 2,
**caractérisé en ce que**,
chaque stade dure au maximum une minute, de préférence dure au maximum 20 secondes et en particulier dure entre 5 et 15 secondes.

4. Procédé selon l'une quelconque des revendications précédentes,
**caractérisé en ce que**
la répétition se fait au moins un nombre prédéterminé de fois périodiquement, dans lequel les deux stades durent des fractions de temps différentes de la période.

5. Procédé selon la revindication 4,
**caractérisé en ce que**
la fraction de temps des deux stades est modifiée.

6. Procédé selon l'une quelconque des revendications précédentes,
**caractérisé en ce que**
il démarre directement par un démarrage à froid du véhicule automobile et/ou la modification permanente contient une augmentation du chargement stocké dans la batterie.

7. Véhicule automobile comprenant un moteur à combustion interne et une commande électrique à laquelle est affectée une batterie électrique pour l'alimentation, un dispositif de commande qui est conçu pour, dans le cadre de son chauffage, de manière répétée décharger en partie la batterie dans un premier stade et la charger en partie ensuite dans un second stade,
**caractérisé en ce que**
le dispositif de commande est conçu pour réaliser une pluralité de répétitions du premier stade et ensuite du second stade de sorte que, après plusieurs périodes de déchargement partiel et de chargement partiel, il se produise une modification de l'état de chargement.
